# EUROPÄISCHE PATENTANMELDUNG

(11) **EP 1 389 699 A2**
(43) Veröffentlichungstag der Anmeldung: **18.02.2004**
(21) Anmeldenummer: 03018078.0
(22) Anmeldetag: 08.08.2003
(51) Int. Cl.: F16H 63/30

(54) **Verriegelungsmechanismus für ein Getriebe und Getriebe**

(30) Priorität: 12.08.2002 US 217301
(71) Anmelder: DEERE & COMPANY, Moline, Illinois 61265-8098 (US)
(72) Erfinder: Ore, Thomas G., Cedar Falls, IA 50613 (US)
(74) Vertreter: Lau-Loskill, Philipp, Dipl.-Phys.

(57) **Zusammenfassung**

Die vorliegende Erfindung betrifft einen Verriegelungsmechanismus für ein Getriebe (10) eines Fahrzeugs. Das Getriebe (10) nimmt eine erste und eine zweite Welle (14,16) drehbar in einem Gehäuse (12) auf. Zum Verhindern einer Fahrzeugbewegung weist das Getriebe (10) eine federbeaufschlagte, durch Druckabfall einrückende Bremsvorrichtung (74) auf. Das Getriebe (10) weist eine Vorrichtung zum Unterbrechen einer Drehmomentverbindung zwischen der ersten Welle (14) und der zweiten Welle (16) auf. Die Vorrichtung zum Unterbrechen einer Drehmomentverbindung enthält eine Öffnung (66), eine Versorgungsleitung (78,80), eine Durchgangsöffnung (86), eine Druckablassleitung (84) und einen Stöpsel (68). Die Öffnung (66) ist in dem Gehäuse (12) vorgesehen und durch sie kann von einem Bediener auf die Vorrichtung zum Unterbrechen einer Drehmomentverbindung zugegriffen werden.

## Beschreibung

Die Erfindung betrifft einen Verriegelungsmechanismus, zum Wirkverbinden einer Vorrichtung zum Unterbrechen einer Drehmomentverbindung eines Getriebes mit einer Bremsvorrichtung in einem Fahrzeug. Weiterhin betrifft die vorliegende Erfindung ein Getriebe mit einem Verriegelungsmechanismus.

Bei einer Wartung oder Diagnose eines Getriebes ist es wünschenswert, die Ausgangswelle des Getriebes abzukoppeln und hierbei zu verhindern, dass ein Drehmoment auf die Ausgangswelle übertragen wird. In einer parallelen europäischen Patentanmeldung gemäß Case 15817 EP wurde eine Vorrichtung zum Unterbrechen einer Drehmomentverbindung eines Getriebes vorgeschlagenen, welche ein verschiebbares Kupplungselement aufweist, welches durch eine Gehäuseöffnung des Getriebes zugänglich ist, wenn ein entfernbaren Stöpsel von der Gehäuseöffnung entfernt wird.

Falls nun Wartungsarbeiten an diesem Getriebe durchgeführt werden, kann zwar die Ausgangswelle des Getriebes mit der Vorrichtung zum Unterbrechen der Drehmomentverbindung ausgerückt werden, jedoch kann das Fahrzeug sich wegbewegen, wenn es nicht mit anderen Mitteln an einer Bewegung gehindert wird.

Der vorliegenden Erfindung liegt daher die Aufgabe zugrunde, einen Verriegelungsmechanismus und ein Getriebe der eingangs genannten Art anzugeben und weiterzubilden, durch welchen bzw. welches das vorgenannte Problem überwunden wird. Insbesondere soll eine Bewegung des Fahrzeugs unterbunden werden, wenn ein Bediener an der Vorrichtung zum Unterbrechen einer Drehmomentverbindung arbeitet.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Der erfindungsgemäße Verriegelungsmechanismus ist für ein Getriebe eines Fahrzeugs vorgesehen. Das Getriebe nimmt eine erste und eine zweite Welle drehbar in einem Gehäuse auf. Zum Verhindern einer Fahrzeugbewegung weist das Getriebe eine federbeaufschlagte, durch Druckabfall eingerückte Bremsvorrichtung auf. Das Getriebe weist eine Vorrichtung zum Unterbrechen einer Drehmomentverbindung zwischen der ersten Welle und der zweiten Welle auf. Die Vorrichtung zum Unterbrechen einer Drehmomentverbindung enthält eine Öffnung, eine Versorgungsleitung, eine Durchgangsöffnung, eine Druckablassleitung und einen Stöpsel. Die Öffnung ist in dem Gehäuse vorgesehen. Durch die Öffnung kann ein Bediener auf die Vorrichtung zum Unterbrechen einer Drehmomentverbindung zugreifen. Mit der Versorgungsleitung ist an die unter Druck stehende Flüssigkeit lieferbar. Die Durchgangsöffnung ist in dem Gehäuse in einer Wand der Öffnung ausgebildet. Die Druckablassleitung verbindet die Versorgungsleitung mit der Durchgangsöffnung. Der Stöpsel ist in der Öffnung montierbar. Der Stöpsel verschließt die Durchgangsöffnung und unterbricht die Verbindung zwischen der Druckablassleitung und der Umgebung, wenn der Stöpsel in der Öffnung montiert ist. Die Durchgangsöffnung und die Druckablassleitung stehen mit der Umgebung in Verbindung, wenn der Stöpsel demontiert ist.

Vorzugsweise ist die Verbindungsleitung und die Druckablassleitung in dem Gehäuse ausgebildet.

Die eingangs genannte Aufgabe bezüglich eines Getriebes wird durch die Merkmale des Patentanspruchs 3 gelöst. Demgemäß weist das erfindungsgemäße Getriebe eine erste und eine zweite Welle auf, welche in einem Gehäuse drehbar angeordnet sind. Das Getriebe umfasst eine Vorrichtung zum Unterbrechen einer Drehmomentverbindung zwischen der ersten Welle und der zweiten Welle. Das Getriebe umfasst eine in dem Gehäuse ausgebildete Öffnung, durch welche ein Bediener auf die Vorrichtung zum Unterbrechen der Drehmomentverbindung zugreifen kann. Das Getriebe umfasst einen in der Öffnung entfernbar befestigbaren Stöpsel. Das Getriebe umfasst eine Bremsvorrichtung, mit welcher eine Drehung der zweiten Welle verhinderbar ist. Ferner umfasst das Getriebe einen Verriegelungsmechanismus, welcher den Stöpsel und die Bremsvorrichtung wirkverbindet und welcher derart ausgebildet ist, dass die Bremsvorrichtung dann einrückt, wenn der Stöpsel von der Öffnung entfernt wird.

Bevorzugt weist die Bremsvorrichtung eine federbeaufschlagte, durch Druckabfall einrückende Sperre auf, welche mit einer Druckquelle über mindestens eine Verbindungsleitung in Verbindung steht. Der Verriegelungsmechanismus weist eine Durchgangsöffnung auf, welche in dem Gehäuse in einer Wand der Öffnung vorgesehen ist. Die Druckablassleitung verbindet die Versorgungsleitung mit der Durchgangsöffnung. Der Stöpsel ist in der Öffnung montierbar. Der Stöpsel verschließt die Durchgangsöffnung und unterbricht die Verbindung zwischen der Druckablassleitung und der Umgebung, wenn der Stöpsel in der Öffnung montiert ist. Die Durchgangsöffnung und die Druckablassleitung steht mit der Umgebung in Verbindung, wenn der Stöpsel demontiert ist.

Vorzugsweise ist die Verbindungsleitung und die Druckablassleitung in dem Gehäuse ausgebildet.

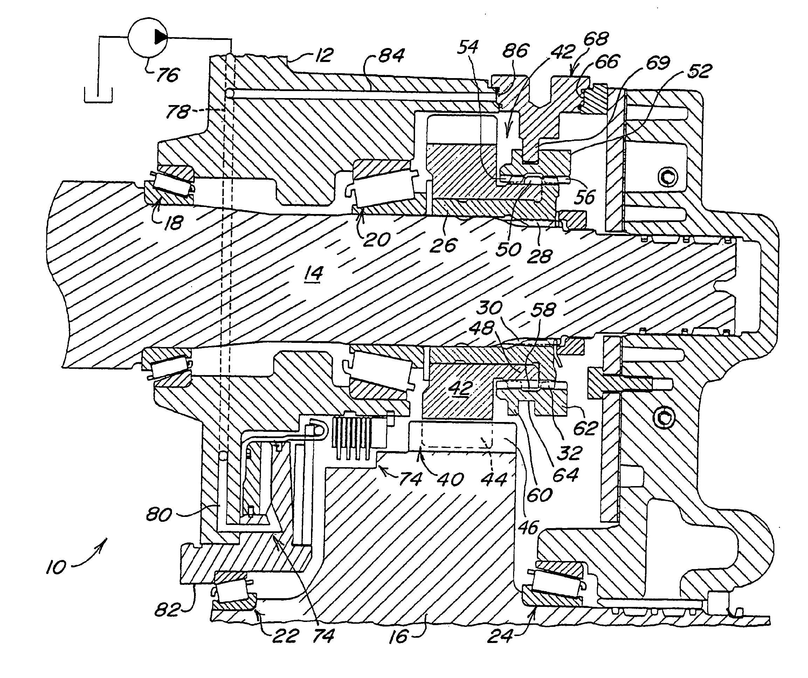

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung des bevorzugten Ausführungsbeispiels der Erfindung anhand der Zeichnung zu verweisen. In Verbindung mit der Erläuterung des bevorzugten Ausführungsbeispiels der Erfindung anhand der Zeichnung wird auch im allgemeinen eine bevorzugte Ausgestaltung und Weiterbildung der Lehre erläutert.

Die einzige Figur der Zeichnung zeigt eine vereinfachte Schnittdarstellung eines Ausführungsbeispiels der vorliegenden Erfindung.

Die einzige Figur zeigt einen Teil eines Getriebes 10, welches ein Gehäuse 12 umfasst, in dem eine Welle 14 und eine Getriebeausgangswelle 16 drehbar gelagert sind. Die Welle 14 könnte eine Ausgangswelle eines in der Figur nicht gezeigten Planetengetriebes sein. Die Welle 14 ist von den Lagern 18 und 20 gelagert. Die Welle 16 ist von den Lagern 22 und 24 gelagert. Ein hohles Nabenzahnrad 26 ist auf der Welle 14 montiert. Das Nabenzahnrad 26 umfasst eine innere Keilverzahnung oder Zähne 28, welche mit den äußeren Zähnen 30 der Welle 14 in Eingriff stehen. Das Nabenzahnrad 26 umfasst auch äußere Zähne 32.

Ein Antriebszahnrad 40 ist drehbar auf einem Abschnitt des Zahnrads 26 montiert. Das Antriebszahnrad 40 umfasst einen Abschnitt 42, welcher einen größeren Durchmesser aufweist und an welchem Zähne 44 vorgesehen sind. Die Zähne 44 greifen in korrespondierende Zähne 46 der Welle 16 ein. Das Antriebszahnrad 40 umfasst weiterhin einen Abschnitt 48, welcher einen kleineren Durchmesser aufweist und an welchem Zähne 50 vorgesehen sind, die in axialer Richtung zu den Zähnen 32 des Zahnrads 26 benachbart angeordnet sind.

Ein Kupplungselement oder eine ringförmige Schaltmuffe 52 ist derart montiert, dass es die Zähne 50 und 32 übergreift. Die Schaltmuffe 52 weist einen im Wesentlichen zylindrischen Grundkörper mit zwei Sätzen von in axialer Richtung beabstandeten Zähnen 54 und 56 auf, welche durch eine innen verlaufende, ringförmige, sich in radialer Richtung erstreckende Ausnehmung 58 voneinander getrennt sind. An der äußeren Oberfläche des ringförmigen Zahnrads 52 sind zwei Ringstege 60 und 62 vorgesehen, welche durch eine außen verlaufende, ringförmige Ausnehmung 64 voneinander getrennt sind.

Das Gehäuse 12 weist eine Öffnung 66 auf, durch welche ein Bediener auf das Zahnrad 52 zugreifen kann. Ein insbesondere zu Wartungszwecken verwendbarer Stöpsel 68, welcher der Lagerfixierung des Zahnrads 52 dient, ist entfernbar in der Öffnung 66 befestigt. Der Stöpsel 68 weist einen Vorsprung oder eine Nase 69 auf, welche mit der Ausnehmung 64 in dem Zahnrad 52 in Eingriff bringbar ist.

Das Getriebe 10 umfasst eine herkömmliche, durch die Kraft einer Feder einrückbare und durch Anlegen eines Hydraulikdrucks die Bremswirkung aufhebende Bremsvorrichtung 74, welche einrückbar ist, um eine Rotation der Ausgangswelle 16 zu verhindern. Sobald der Hydraulikdruck abfällt, rückt die Bremse infolge der Kraft der Feder ein. Eine Druckquelle 76, welche eine herkömmliche, manuell bedienbare Bremsvorrichtungspumpe aufweisen kann, liefert ein begrenztes Volumen von unter Druck stehender Flüssigkeit über die Versorgungsleitungen 78 und 80 zur Bremsvorrichtung 74. Die Versorgungsleitungen 78 und 80 sind im Gehäuse 12 und in einer Bremsvorrichtung-Gehäuseeinheit 82 vorgesehen. Eine Druckablassleitung 84 ist ebenfalls in dem Gehäuse 12 ausgebildet und verbindet die Versorgungsleitung 78 mit einer Durchgangsöffnung 86, welche in der Öffnung 66 vorgesehen ist.

Die Schaltmuffe 52 kann in eine eingerückte Position gebracht werden, bei welcher die Zähne 54 und 56 in kämmenden Eingriff mit den Zähnen 50 und 32 stehen. In dieser Position kann ein Drehmoment von der Welle 14 auf die Welle 16 übertragen werden.

Zum Abkuppeln der Welle 14 von der Welle 16 wird der Stöpsel 68 aus der Öffnung 66 entfernt und es wird ein nicht gezeigtes Werkzeug durch die Öffnung 66 in die Ausnehmung 64 eingeführt. Mit diesem Werkzeug wird die Schaltmuffe 52 derart bewegt, dass sie nach rechts gleitet, um in eine abgekuppelte bzw. ausgerückte Position gebracht zu werden. Das Entfernen des Stöpsels 68 aus der Öffnung 66 öffnet die Durchgangsöffnung 86. Hierdurch steht die Bremsvorrichtung 74 über die Verbindungsleitungen 80, 78 und 84 mit der Atmosphäre bzw. Umgebung in Verbindung, wodurch die Bremsvorrichtung 74 drucklos wird und einrückt, so dass eine Rotation der Welle 16 verhindert wird.

Vorzugsweise wird dann der Stöpsel 68 derart orientiert, dass die Zunge 69 auf der rechten Seite angeordnet ist. Dann wird der Stöpsel 68 wieder in die Öffnung 66 eingesetzt, so dass die Nase 69 von der ringförmige Ausnehmung 64 aufgenommen werden kann. Die Nase 69 hält das ringförmige Zahnrad 52 dann in seiner ausgerückten Position, in welcher die Zähne 56 von den Zähnen 32 getrennt voneinander angeordnet sind. In dieser Position wird kein Drehmoment von der Welle 14 auf die Welle 16 übertragen.

Der Stöpsel 68 hat im Wesentlichen einen zylinderförmigen Kopf, in welchem zwei ringförmige Ausnehmungen vorgesehen sind, welche O-Dichtringe aufnehmen. Wenn der Stöpsel 68 in der Öffnung 66 montiert ist, ist die Durchgangsöffnung 86 verschlossen bzw. abgedichtet, und die Verbindungsleitungen 84, 78 und 80 sowie die Bremsvorrichtung 74 verbleiben druckbeaufschlagt im nicht eingerückten Zustand.

Abschließend sei ganz besonders darauf hingewiesen, dass das voranstehend erörterte Ausführungsbeispiel lediglich zur Beschreibung der beanspruchten Lehre dienen, diese jedoch nicht auf das Ausführungsbeispiel einschränkt.

## Patentansprüche

1. Verriegelungsmechanismus für ein Getriebe (10) eines Fahrzeugs, wobei das Getriebe (10) eine erste und eine zweite Welle (14, 16) drehbar in einem Gehäuse (12) aufnimmt, wobei zum Verhindern einer Fahrzeugbewegung das Getriebe (10) eine federbeaufschlagte, durch Druckabfall einrückende Bremsvorrichtung (74) aufweist, und wobei das Getriebe (10) eine Vorrichtung zum Unterbrechen einer Drehmomentverbindung zwischen der ersten Welle (14) und der zweiten Welle (16) aufweist, mit einer Öffnung (66), einer Versorgungsleitung (78, 80), einer Durchgangsöffnung (86), einer Druckablassleitung (84) und einem Stöpsel (68), wobei die Öffnung (66) in dem Gehäuse (12) vorgesehen ist und durch welche ein Bediener auf die Vorrichtung zum Unterbrechen einer Drehmomentverbindung zugreifen kann, wobei mit der Versorgungsleitung (78, 80) an die Bremsvorrichtung (74) unter Druck stehende Flüssigkeit lieferbar ist, wobei die Durchgangsöffnung (86) in dem Gehäuse (12) in einer Wand der Öffnung (66) ausgebildet ist, wobei die Druckablassleitung (84) die Versorgungsleitung (78) mit der Durchgangsöffnung (86) verbindet, wobei der Stöpsel (86) in der Öffnung (66) montierbar ist, wobei der Stöpsel (68) die Durchgangsöffnung (86) verschließt und die Verbindung zwischen der Druckablassleitung (84) und der Umgebung unterbricht, wenn der Stöpsel (68) in der Öffnung (66) montiert ist, und wobei die Durchgangsöffnung (86) und die Druckablassleitung (84) mit der Umgebung in Verbindung stehen, wenn der Stöpsel (68) demontiert ist.

2. Verriegelungsmechanismus nach Anspruch 1, **dadurch gekennzeichnet, dass** die Verbindungsleitung (78, 80) und die Druckablassleitung (84) in dem Gehäuse (12) ausgebildet ist.

3. Getriebe mit einer ersten und einer zweiten Welle (14, 16), welche in einem Gehäuse (12) drehbar angeordnet sind, mit einer Vorrichtung zum Unterbrechen einer Drehmomentverbindung zwischen der ersten Welle (14) und der zweiten Welle (16), mit einer in dem Gehäuse (12) ausgebildeten Öffnung (66), durch welche ein Bediener auf die Vorrichtung zum Unterbrechen der Drehmomentverbindung zugreifen kann, mit einem in der Öffnung (66) entfernbar befestigbaren Stöpsel (68), mit einer Bremsvorrichtung (74), mit welcher eine Drehung der zweiten Welle (16) verhinderbar ist und mit einem Verriegelungsmechanismus, welcher den Stöpsel (68) und die Bremsvorrichtung (74) wirkverbindet und derart ausgebildet ist, dass die Bremsvorrichtung (74) dann einrückt, wenn der Stöpsel (68) von der Öffnung (66) entfernt ist.

4. Getriebe nach Anspruch 3, **dadurch gekennzeichnet, dass** die Bremsvorrichtung (74) eine federbeaufschlagte, durch Druckabfall einrückende Sperre aufweist, welche mit einer Druckquelle (76) über eine Verbindungsleitung (78, 80) in Verbindung steht, wobei der Verriegelungsmechanismus eine Durchgangsöffnung (86) aufweist, welche in dem Gehäuse 12 in einer Wand der Öffnung 66 vorgesehen ist, wobei die Druckablassleitung (84) die Versorgungsleitung (78) mit der Durchgangsöffnung (86) verbindet, wobei der Stöpsel (86) in der Öffnung (66) montierbar ist, wobei der Stöpsel (68) die Durchgangsöffnung (86) verschließt und die Verbindung zwischen der Druckablassleitung (84) und der Umgebung unterbricht, wenn der Stöpsel (68) in der Öffnung (66) montiert ist, und wobei die Durchgangsöffnung (86) und die Druckablassleitung (84) mit der Umgebung in Verbindung steht, wenn der Stöpsel (68) demontiert ist.

5. Getriebe nach Anspruch 4, **dadurch gekennzeichnet, dass** die Verbindungsleitung (78, 80) und die Druckablassleitung (84) in dem Gehäuse (12) ausgebildet ist.
